(19) Europäisches Patentamt

European Patent Office

Office européen des brevets

(11) **EP 0 662 882 B1**

(12) **EUROPÄISCHE PATENTSCHRIFT**

(45) Veröffentlichungstag und Bekanntmachung des Hinweises auf die Patenterteilung:
**07.01.1998 Patentblatt 1998/02**

(51) Int. Cl.$^6$: **B60G 17/04**, B60G 11/30, F16F 9/06

(21) Anmeldenummer: 93924032.1

(22) Anmeldetag: **11.10.1993**

(86) Internationale Anmeldenummer:
**PCT/EP93/02779**

(87) Internationale Veröffentlichungsnummer:
**WO 94/08808 (28.04.1994 Gazette 1994/10)**

(54) **HYDROPNEUMATISCHES FEDERUNGSSYSTEM**

HYDROPNEUMATIC SUSPENSION SYSTEM

SYSTEME DE SUSPENSION HYDROPNEUMATIQUE

(84) Benannte Vertragsstaaten:
**BE DE ES FR GB IT NL SE**

(30) Priorität: **10.10.1992 DE 4234217**
**01.05.1993 DE 9306581 U**

(43) Veröffentlichungstag der Anmeldung:
**19.07.1995 Patentblatt 1995/29**

(73) Patentinhaber:
**HEMSCHEIDT FAHRWERKTECHNIK GmbH & Co.**
**42781 Haan (DE)**

(72) Erfinder: **RUNKEL, Walter**
**D-42289 Wuppertal (DE)**

(74) Vertreter:
**Patentanwälte**
**Dr. Solf & Zapf**
**Postfach 13 01 13**
**42028 Wuppertal (DE)**

(56) Entgegenhaltungen:
**EP-A- 0 052 782** **EP-A- 0 425 876**
**WO-A-93/05971** **DE-A- 2 116 913**
**DE-A- 3 139 600** **DE-A- 3 936 034**
**FR-A- 1 094 209** **US-A- 2 937 663**
**US-A- 5 052 712**

- **PATENT ABSTRACTS OF JAPAN vol. 7, no. 261 (M-257)19. November 1983 & JP,A,58 142 048 (YAMAHA HATSUDOKI) 23. August 1983**
- **PATENT ABSTRACTS OF JAPAN vol. 13, no. 376 (M-862)21. August 1989 & JP,A,01 131 346 (KAYABA IND. CO.) 24. Mai 1989**

## Beschreibung

Die vorliegende Erfindung betrifft ein hydropneumatisches Federungssystem insbesondere für Kraftfahrzeuge, mit mindestens einem hydraulischen Federbein, welches bei seinen Federungsbewegungen über ein Hydraulikmedium gegen mindestens einen hydropneumatischen Kolbenspeicher wirkt, der einen einen Hydraulik-Speicherraum von einer ein kompressibles Medium, insbesondere ein Gas, enthaltenden Federkammer trennenden Trennkolben aufweist, wobei auf den Trennkolben einerseits vom Speicherraum her ein hydraulischer Druck und andererseits von der Federkammer her ein pneumatischer Druck wirken, und wobei zusätzlich zu den aus dem hydraulischen Druck und dem pneumatischen Druck durch Beaufschlagung des Trennkolbens resultierenden Kräften auf den Trennkolben des Kolbenspeichers mindestens eine Zusatz-Federkraft wirkt.

Bei hydropneumatisches Federungssystemen wird durch die Federungsbewegungen des Federbeins, d.h. durch Bewegungen eines Kolbens innerhalb eines Zylinders, ein Hydraulikmedium in Strömung versetzt. Beim Einfedern des Federbeins strömt ein bestimmtes Volumen des Hydraulikmediums in den Speicherraum eines hydropneumatischen Speichers, wodurch sich das Volumen eines darin enthaltenen kompressiblen Mediums, üblicherweise eines Gases, verringert. Durch diese Komprimierung wird ein Druckanstieg und damit eine elastische Federwirkung hervorgerufen, die nachfolgend eine Rückströmung des Hydraulikmediums zum Ausfedern des Federbeins bewirkt. In einer statischen Lage des Federbeins bewirkt der pneumatische Druck über das Hydraulikmedium innerhalb des Federbeins eine Tragkraft zur Abstützung der jeweiligen Last.

Der wesentliche Vorteil von hydropneumatischen Federungssystemen besteht darin, daß auch bei sich ändernden Lastverhältnissen (Verhältnis zwischen Leerlast und Vollast des Federbeins) nahezu gleichbleibende Federungseigenschaften erreicht werden können, indem durch eine hydraulische Nivellierung, d.h. durch Zuführen oder Entnehmen von Hydraulikmedium, das Fahrzeugniveau und damit auch die zur Verfügung stehenden Federwege praktisch konstant gehalten werden können. Dies bedeutet, daß praktisch eine lastunabhängige Federung zu erreichen ist. Daher sind derartige Systeme vor allem für Lastkraftwagen geeignet, bei denen ja in der Regel ein großes Lastverhältnis auftritt.

Allerdings ist hierbei von Nachteil, daß für ein großes Lastverhältnis das kompressible Medium ein sehr großes Gesamtvolumen haben muß, damit von der Federkammer bzw. dem darin befindlichen Medium bei - aus Komfortgründen - möglichst flacher, "weicher" Kennlinie das gesamte Belastungsverhältnis des Federbeins mit möglichst geringer Druckänderung (Volumenänderung des kompressiblem Mediums) aufgenommen werden kann. Dies führt zu einer sehr großen Baugröße des Federspeichers mit langen Verschiebewegen des Trennkolbens, was in einem Fahrzeug Einbauprobleme verursachen kann und natürlich auch zu hohen Kosten für den Speicher führt.

Aus der US-A-4 153 237 ist ein Federungssystem der eingangs beschriebenen Art bekannt, wobei zur Beeinflussung der Federkennlinie des Kolbenspeichers innerhalb der Federkammer, d.h. innerhalb des pneumatischen Druckmediums, eine Schraubendruckfeder angeordnet ist, die somit den Trennkolben mit einer gegen den hydraulischen Druck und in Richtung des pneumatischen Druckes wirkenden Zusatz-Federkraft beaufschlagt. Hierbei ist aber von Nachteil, daß die Schraubenfeder den Bewegungsbereich des Trennkolbens in Richtung der Federkammer stark einschränkt, weshalb das pneumatische Medium nicht beliebig komprimiert werden kann. Daher kann die Federkennlinie auch nicht ohne weiteres auf beliebige Anforderungen abgestimmt werden.

Die JP-A-58 142 048 beschreibt einen Dämpfer, der einerseits zur Lastabstützung eine mechanische Feder aufweist, und der andererseits zum Ausgleich eines bei steigender Temperatur auftretenden Gasdruckanstieges mit einem "Hilfsspeicher" verbunden ist. Dieser besteht aus einem Hilfszylinder und einem darin freibeweglichen Kolben, der gegen einen Gasraum wirkt. Dabei wird dieser Kolben von einer im Hydraulikmedium angeordneten Feder in Richtung des Gasraums beaufschlagt. Diese Feder besteht zum Zwecke des Temperaturausgleichs aus einem speziellen Werkstoff (form memorizing alloy) derart, daß sie sich oberhalb einer vorbestimmten Temperatur bis zu einer bestimmten freien Länge verlängert.

Die DE-A-2 116 913 beschreibt einen Stoßdämpfer, der mit einer nach Art eines Kolbenspeichers ausgebildeten Druckverstelleinrichtung hydraulisch verbunden ist. Diese Verstelleinrichtung weist einen Hydraulikraum und einen Expansionsraum auf. Beide Räume sind durch einen Kolben getrennt. Eine Feder hält den Kolben solange in Position, wie ein Ventil die Zufuhr von Preßluft in den Expansionsraum sperrt. Wird das Ventil betätigt, so wird der Verstellkolben durch die Preßluft in Richtung des Hydraulikraums gedrückt, wodurch ein zusätzliches Volumen des Stoßdämpfmediums in den Stoßdämpfer gelangt.

Aus der EP-A-0 052 782 (bzw. der entsprechenden US-A-4 478 431) ist ein weiteres Federungssystem bekannt, bei dem aber pro Federbein mindestens zwei Speicher vorhanden sind. In einigen Ausführungsformen ist einer der vorhandenen Speicher als Kolbenspeicher ausgebildet, dessen Trennkolben zusätzlich von einer im Gasraum angeordneten Feder beaufschlagt ist. Durch die jeweils vorhandenen mindestens zwei Speicher ist die Abstimmung der Federkennlinie schwierig.

Bei einem aus der DE-A-39 36 034 bekannten Federungssystem ist es einerseits vorgesehen, den Kolbenspeicher als Druckwandler derart auszubilden, daß der pneumatische Druck des kompressiblen Mediums in der Federkammer stets kleiner als der hydraulische Druck innerhalb des Speicherraums und damit auch innerhalb des Federbeins ist. Andererseits soll gemäß einer Weiterbildung die Bewegung des Kolbens im Zylinder des Federbeins über das verdrängte Hydraulikmedium mit einem bestimmten Weg-Über- bzw. Untersetzungsverhältnis auf den Trennkolben übertragen werden (hydraulische Übersetzung).

Ein weiteres hydropneumatisches Federungssystem ist aus der DE-A-40 08 831 bekannt. Hierbei teilt der Kolben des Federbeins über seine Kolbendichtung innerhalb des Zylinders zwei Druckräume voneinander ab, und zwar einerseits einen eine Kolbenstange umschließenden Ringraum und andererseits einen der Kolbenstange gegenüberliegenden, "lasttragenden" Zylinderraum, wobei diese beiden Druckräume hydraulisch voneinander unabhängig mit jeweils einem separaten Federspeicher verbunden sind. Der eine Federspeicher bewirkt innerhalb des Zylinderraums einen ersten hydraulischen Druck, der durch Beaufschlagung der entsprechenden Druckfläche des Kolbens eine Abstützkraft (Tragkraft) erzeugt, und durch den anderen Federspeicher werden der Ringraum und die diesem zugekehrte Druckfläche des Kolbens mit einem zweiten hydraulischen Druck beaufschlagt, wodurch eine der Abstützkraft entgegenwirkende Gegenkraft entsteht. Bei diesem bekannten Federungssystem wird durch diese als "künstliche Last" wirkende Gegenkraft das von dem "lasttragenden" Federspeicher aufzunehmende Lastverhältnis reduziert, indem die Gegenkraft stets zu der jeweils tatsächlich vorhandenen Last hinzukommt. Beispielsweise ergibt sich ohne diese Gegenkraft bei einer Leerlast von z.B. 6 kN und einer Vollast von z.B. 60 kN ein Lastverhältnis von 1 : 10. Wird hierbei aber eine in Lastrichtung wirkende Gegenkraft von z.B. 10 kN erzeugt, so resultiert hieraus ein Lastverhältnis von 16 kN : 70 kN = 1 : ca. 4,4. Hierdurch kann nun zwar eine Reduzierung der Baugröße des lasttragenden Speichers bzw. dessen notwendigen Gasvolumens erreicht werden, allerdings stellt es einen gewissen Nachteil dar, daß insgesamt (pro Federbein) zwei Federspeicher erforderlich sind, da ja ein Federspeicher aufgrund seiner konstruktiven Ausgestaltung, insbesondere aufgrund der erforderlichen Abdichtungen, ein relativ teures Bauteil ist. Darüber hinaus können aber auch Abdichtungsprobleme im Bereich der Kolbendichtung des Federbeins auftreten, weil diese von beiden Seiten her mit den jeweiligen hydraulischen Drücken beaufschlagt wird, wobei diese beiden Drücke üblicherweise geringfügig verschieden sind, so daß die Dichtung nur gegen einen geringen Differenzdruck abdichten muß. Eine Kolbendichtung benötigt nun aber eigentlich eine einseitige Druckbeaufschlagung mit einer bestimmten Mindesthöhe, um zuverlässig abdichten zu können. Aus diesem Grund können innerhalb des Federbeins des bekannten Federungssystem Lekkagen derart auftreten, daß Hydraulikmedium über die Kolbendichtung vom Zylinderraum in den Ringraum oder umgekehrt übertritt, was dann aber eine unerwünschte Veränderung der Federcharakteristik zur Folge hat. Ferner führt aber die Erzeugung der Gegenkraft im Bereich des Federbeins noch zu dem unschönen Nebeneffekt, daß im Falle einer Nivellierung, wobei z.B. bei einer Lasterhöhung das Federbein durch Zuführen von Hydraulikmedium wieder in ein statisches Soll-Niveau (in der Regel etwa die Mittelstellung seines Hubs) gebracht wird, die Gegenkraft jeweils ansteigt, da ein Anheben des Niveaus stets mit einer Volumenreduzierung des Federbein-Ringraumes und demzufolge auch mit einem Druckanstieg in dem zugehörigen Speicher verbunden ist. Daher muß eine den hydraulischen Druck erzeugende Einrichtung, üblicherweise eine Pumpe, übermäßig leistungsfähig sein; in Lastkraftwagen kann hierdurch eine Pumpenleistung von über 200 bar, z.B. 230 bis 250 bar, erforderlich werden.

Der vorliegenden Erfindung liegt nun die Aufgabe zugrunde, ein Federungssystem der gattungsgemäßen Art konstruktiv und hinsichtlich des finanziellen Aufwandes für seine Komponenten zu vereinfachen und dabei aber auch so zu verbessern, daß auf einfache Weise praktisch eine beliebige, stets gleichbleibend optimale Federcharakteristik erreicht werden kann.

Erfindungsgemäß wird dies durch die Merkmale des Patentanspruches 1 erreicht. Vorteilhafte Weiterbildungen und besondere Ausführungsformen der Erfindung sind in den abhängigen Ansprüchen enthalten.

Aufgrund der Erfindung läßt sich das kompressible Medium innerhalb der Federkammer nahezu beliebig komprimieren, weshalb in Verbindung mit der Beaufschlagung des Trennkolbens mit der Zusatz-Federkraft eine Einstellung der resultierenden Federkennlinie in einem sehr weiten Bereich auf einfache Weise möglich ist. Ferner werden durch die Erfindung noch weitere gravierende Vorteile gegenüber dem Stand der Technik, insbesondere auch gegenüber der US-A-4 153 237, erreicht; auf diese Vorteile wird in der nachfolgenden Beschreibung noch genauer eingegangen werden.

Mit der jeweils wirksamen Zusatz-Federkraft wird das Volumen des kompressiblen Mediums - zusätzlich zu den "normalen", last- und federungsbedingten Volumenänderungen - derart beeinflußt, daß sich sein Gesamtvolumen vorteilhafterweise verringern kann. Dies liegt daran, daß sich für den Kolbenspeicher bzw. dessen Federkammer aufgrund der ZusatzFederkraft ein anderes, sich von dem Lastverhältnis des Federbeins unterscheidendes Lastverhältnis (bzw. ein Kompressions- und Druckverhältnis, welches von den "normalen", ohne Zusatz-Federkraft vorhandenen Verhältnissen abweicht) einstellt, wobei dieses "Speicher-Lastverhältnis" gegenüber dem Lastverhältnis des Federbeins vorteilhafterweise wesentlich geringer ist. Dies führt dazu, daß der Speicher insgesamt kleiner und kompakter und mit kürzerem Hub des Trennkolbens ausgebildet werden kann.

Es erübrigt sich somit eine aus obigen Gründen nachteilige Erzeugung einer Gegenkraft im Bereich des Federbeins, wie sie aus der DE-A-40 08 831 bekannt ist. Beim Nivellieren braucht eine Pumpe lediglich den der tatsächlichen Last entsprechenden Druck zu erzeugen, so daß eine Pumpenleistung von maximal 200 bar jedenfalls ausreicht. Ferner ist auch nur noch ein Speicher pro Federbein erforderlich. Dies ist insofern von Vorteil, als in den beiden Druckräumen des Federbeins jeweils der gleiche hydraulische Druck herrscht, so daß die oben beschriebenen Abdichtungsprobleme vermieden werden. Alternativ hierzu ist es allerdings ebenfalls möglich, den Ringraum über eine Lüftungsöffnung mit der Atmosphäre zu verbinden, so daß in diesem Fall aber ebenfalls die Abdichtungsprobleme beseitigt werden, weil die Kolbendichtung in der Lage ist, einen hohen Differenzdruck abzudichten.

In einer ersten möglichen Ausführungsform der Erfindung beaufschlagt die Zusatz-Federkraft den Trennkolben in Richtung der Federkammer, d.h. in Richtung der "hydraulischen Kraft", und zwar insbesondere derart, daß die Zusatz-Federkraft bei einer geringen Last des Federbeins und dementsprechend geringem hydraulischen Druck größer ist als bei einer höheren Last und entsprechend höherem hydraulischen Druck. Dies bedeutet, daß erfindungsgemäß durch die Zusatz-Federkraft das kompressible Medium "künstlich", d.h. zusätzlich zur normalen Last, weitergehend komprimiert (gespannt) wird, wobei diese "künstliche Komprimierung" bei geringer Belastung des Federbeins relativ höher als bei hoher Belastung ist. Bei dieser Ausführungsform ist die Wirkrichtung der Zusatz-Federkraft somit genau entgegengesetzt zum Stand der Technik gemäß US-A-4 153 237 und US-A-4 478 431.

In einer zweiten Ausführungsform beaufschlagt die Zusatz-Federkraft den Trennkolben in Richtung des Speicherraumes, d.h. in Richtung der "pneumatischen Kraft", und zwar insbesondere derart, daß die Zusatz-Federkraft bei einer geringen Last des Federbeins und dementsprechend geringem hydraulischen Druck kleiner ist, als bei einer höheren Last und entsprechend höherem Druck. Hierbei handelt es sich folglich um eine "künstliche Entspannung" (Expansion) des kompressiblen Mediums im Vergleich zu den Verhältnissen bei "normaler Last", wobei diese "künstliche Entspannung" bei großer Last des Federbeins relativ höher als bei kleiner Last ist. Diese Wirkrichtung entspricht somit zwar grundsätzlich dem Stand der Technik (vgl. insbesondere US-A-4 153 237), das Federelement ist aber erfindungsgemäß dennoch "außerhalb der Federkammer" angeordnet. Dies wird erfindungsgemäß dadurch erreicht, daß der Trennkolben eine aus dem Kolbenspeicher abgedichtet nach außen geführte Trennkolbenstange aufweist, an der dann mindestens ein Federelement angreift, um so den Trennkolben über die Trennkolbenstange mit der Zusatz-Federkraft zu beaufschlagen. Diese Maßnahme wird auch für die erste Ausführungsform angewandt, d.h. wenn die Zusatz-Federkraft in der gleichen Richtung wie die hydraulische Kraft und somit gegen die pneumatische Kraft wirken soll.

In einer besonders vorteilhaften Weiterbildung der Erfindung (dritte Ausführungsform) ist nun allerdings der Trennkolben in beiden Richtungen mit jeweils einer Zusatz-Federkraft beaufschlagt, und zwar erfindungsgemäß wiederum mittels außenliegender Federelemente über eine Trennkolbenstange des Speicher-Trennkolbens. Hierbei ergibt sich eine resultierende Zusatz-Federkraft aus der Summe (Differenz) dieser beiden gegensinnigen Federkräfte, und zwar insbesondere derart, daß durch die Zusatz-Federkraft bei hoher Last des Federbeins der dieser Last an sich entsprechende pneumatische Druck reduziert und bei niedriger Last der dieser an sich entsprechende pneumatische Druck erhöht werden. Durch diese bevorzugte Maßnahme wird eine besonders effektive Reduzierung des für das jeweilige Lastverhältnis des Federbeins erforderlichen Volumens des kompressiblen Mediums erreicht. Dies soll an dieser Stelle an einem einfachen Zahlenbeispiel deutlich gemacht werden.

Beispielsweise beträgt bei gegebenen Last- und Auslegungsverhältnissen eines Federungssystems ohne die erfindungsgemäßen Maßnahmen der Druck in der Federkammer im beladenen Zustand des Federbeins 150 bar bei einem Volumen von 1.000 cm$^3$ und im leeren Zustand 40 bar. Aus dem Druckverhältnis 150 bar : 40 bar ergibt sich ein Faktor von 3,75, mit dem das Volumen im beladenen Zustand ("Lastvolumen") multipliziert werden muß, um das Volumen im leeren Zustand ("Leervolumen") zu erhalten; somit ergibt sich hieraus, daß im Leerzustand ein Leervolumen von 1.000 cm$^3$ · 3,75 = 3.750 cm$^3$ erforderlich ist.

Im Gegensatz dazu ergibt sich nun mit der erfindungsgemäßen Zusatz-Federkraft einerseits eine Reduzierung des "beladenen Druckes" auf z.B. 100 bar sowie andererseits eine Erhöhung des "Leerdruckes" auf z.B. 60 bar, woraus sich ein Verhältnisfaktor von 100 : 60 = 1,667 ergibt. Daraus folgt - bei dem genannten "Lastvolumen" von 1.000 cm$^3$ - eine Reduzierung des "Leervolumens" auf nur noch 1.000 cm$^3$ · 1,667 = 1.667 cm$^3$. Das für das Lastverhältnis des Federbeins erforderliche Volumen des kompressiblen Mediums kann somit durch die Erfindung wesentlich reduziert werden, im genannten Beispiel um mehr als 50%.

Durch die erfindungsgemäße Reduzierung des Gasvolumens im Leerzustand wird zudem erreicht, daß die Federsteifigkeit c im Leerzustand größer wird, so daß vorteilhafterweise auch die Eigenfrequenz des Systems im beladenen und leeren Zustand praktisch gleich bleibt. Demgegenüber ergibt sich bei großem "Leer-Gasvolumen", wie es bei bekannten Systemen zumeist vorhanden war, aufgrund einer geringeren Federsteifigkeit stets eine große Differenz in der Eigenfrequenz zwischen beladenem und leerem Zustand.

Aufgrund der erfindungsgemäßen Beeinflussung der Druckverhältnisse innerhalb des Kolbenspeichers durch die ZusatzFederkraft kann nun zwar - in Abhängigkeit von der jeweiligen Auslegung der Systemgrößen (insbesondere der Auslegung der (resultierenden) Zusatz-Federkraft-Kennlinie) - der Fall eintreten, daß ab einer bestimmten Last der pneumatische Druck größer als der hydraulische Druck wird. In diesem Fall ist der Trennkolben mit einer speziellen "Gasdichtung" auszustatten. Natürlich kann die Auslegung auch derart vorgenommen werden, daß der pneumatische Druck stets kleiner oder maximal gleich dem hydraulischen Druck ist, so daß dann eine einfachere "Öldichtung" für den Trennkolben ausreichend ist.

Die erfindungsgemäße Zusatz-Federkraft kann auf viele verschiedene Arten erzeugt werden, so z.B. mit mechanischen Druck- und/oder Zugfedern oder mit hydropneumatischen Federn (Speichern). Einige vorteilhafte Möglichkeiten sind konkret in der nachfolgenden Beschreibung von bevorzugten Ausführungsbeispielen erläutert.

Die Erfindung führt somit zu wesentlichen Vorteilen gegenüber dem Stand der Technik. Insbesondere die erfindungsgemäße Maßnahme, mindestens ein Federelement über eine aus dem Speicher nach außen geführte Trennkolbenstange auf den Trennkolben wirken zu lassen, führt zu einem beachtlichen technischen Fortschritt, denn im Vergleich zu einer - beispielsweise aus der US-A-4 153 237 bekannten - internen Anordnung einer mechanischen Feder im Gasraum ist nun erfindungsgemäß das bzw. jedes den Trennkolben beaufschlagende Federelement extern, außerhalb des Speichers angeordnet. Dies führt unter anderem zu folgenden wichtigen Vorteilen:

1. Zur Veränderung der Federcharakteristik kann auf besonders einfache Weise ein Austausch des oder der Federelemente erfolgen, ohne dafür den Speicher demontieren zu müssen.

Im Gegensatz dazu wäre es bei der bekannten, internen Anordnung der Feder im Gasraum erforderlich, für jeden Feder-Austausch den Speicher zu demontieren und nach Feder-Austausch wieder mit großem Abdichtungsaufwand zu montieren. Zudem leiden hierunter auch die Dichtflächen, so daß der Speicher spätestens nach mehreren solcher Federaustausch-Vorgänge (die zur Abstimmung der Federkennlinie durchaus erforderlich sein können) unbrauchbar werden kann.

2. Erfindungsgemäß sind eventuelle Schäden im Bereich der den Trennkolben beaufschlagenden Federelemente von außen ohne Schwierigkeiten erkennbar. Beispielsweise ist ein Bruch einer mechanischen Feder sofort zu sehen; die gebrochene Feder kann dann leicht ersetzt werden (vgl. 1.).

Bei der bekannten internen Anordnung wäre demgegenüber eine gebrochene Feder zunächst nicht unmittelbar erkennbar, sondern es würde sich eine veränderte Federkennlinie einstellen, für die zunächst keine Ursache erkennbar wäre. Erst nach einer zeit- und kostenaufwendigen Fehlersuche und nach Demontage des Speichers könnte die gebrochene Feder diagnostiziert werden. Bis dahin würde es aber sicherlich bereits zu Beschädigungen der inneren Speicher-Mantelfläche durch im Bruchbereich der Feder vorhandene scharfe Kanten kommen, wodurch der Speicher aber unbrauchbar würde.

3. Zur Auslegung der Federcharakteristik ist es oft auch erforderlich, den pneumatischen Druck zu verändern, was dann aber zwangsläufig auch zu einer Änderung der den Trennkolben beaufschlagenden Zusatz-Federkraft führt, weil sich ja der Trennkolben dabei entspechend verschiebt. Bei einer internen Anordnung des Federelementes läßt sich diese Federkraft-Änderung nicht kompensieren.

Im Gegensatz dazu ist es nun aber erfindungsgemäß durch die externe Anordnung des bzw. jedes Federelementes auf einfache Weise möglich, dessen Vorspannung über Einstellmittel zu verändern, so daß bei einer Änderung des pneumatischen Druckes auch eine dadurch (durch Verschiebung des Trennkolbens) bewirkte Änderung der Federvorspannung beliebig kompensiert werden kann. Zudem können vorteilhafterweise auch herstellungsbedingte Toleranzen (z.B. Längentoleranzen) der Federelemente durch die Einstellmittel auf einfache Weise ausgeglichen werden.

Einige vorteilhafte Ausführungsformen solcher Einstellmittel werden in der folgenden Beschreibung noch genauer erläutert werden.

Anhand von mehreren in der beiliegenden Zeichnung dargestellten Ausführungsbeispielen soll die Erfindung nun noch näher erläutert werden. Dabei zeigt:

Fig. 1    eine erste Ausführungsform eines erfindungsgemäßen Federungssystems in vereinfachten, prinzipiellen Schnittansichten seiner Komponenten, d.h. insbesondere eines Federbeins und eines Kolbenspeichers,

Fig. 2    eine Ansicht analog zu Fig. 1 in einer zweiten Ausführungsform,

Fig. 3    die wesentlichen Teile bzw. Komponenten einer dritten Ausführungsform des erfindungsgemäßen Federungssystems,

Fig. 4    den Kolbenspeicher in einer weiteren, bevorzugten Ausführungsform der Erfindung,

Fig. 5    eine Seitenansicht einer vorteilhaften Weiterbildung eines Kolbenspeichers mit teilweise axial geschnittenen Komponenten,

Fig. 6 einen detaillierten Teil-Axialschnitt des hydropneumatischen Kolbenspeichers gemäß Fig. 5.

In den verschiedenen Zeichnungsfiguren sind gleiche Teile stets mit den gleichen Bezugszeichen versehen, so daß jede eventuell nur einmal vorkommende Beschreibung eines Teils analog auch für die jeweils anderen Zeichnungsfiguren gilt, in denen dieses Teil mit dem entsprechenden Bezugszeichen ebenfalls zu erkennen ist.

Ein erfindungsgemäßes Federungssystem besteht als Hauptkomponenten aus mindestens einem hydraulischen Federbein 2 und einem mit diesem über eine hydraulische Verbindung 4 verbundenen, hydropneumatischen Kolbenspeicher 6.

Das Federbein 2 besteht seinerseits aus einem Zylinder 8, einem darin beweglich geführten Kolben 10 und einer mit dem Kolben 10 verbundenen, aus dem Zylinder 8 nach außen geführten Kolbenstange 12, wobei der Kolben 10 innerhalb des Zylinders 8 einen "lasttragenden", d.h. unter einem lastabhängigen, hydraulischen Druck $p_h$ stehenden Zylinderraum 14 von einem die Kolbenstange 12 umschließenden Ringraum 16 abteilt. Das Federbein 2 wird in einem Fahrzeug zur Rad- bzw. Achsabstützung zwischen einer ungefederten Masse und einer gefederten Masse angeordnet, indem beispielsweise das freie Ende der Kolbenstange 12 mit einem angedeuteten Rad 18 oder einem bestimmten Achsteil und das gegenüberliegende Ende des Zylinders 8 mit einem Fahrzeugrahmen verbunden werden. Ein "umgekehrter" Einbau ist natürlich ebenfalls möglich.

Der Kolbenspeicher 6 ist vorzugsweise räumlich unabhängig von dem Federbein 2 ausgebildet und angeordnet und besteht aus einem Speicherzylinder 20, in dem ein Trennkolben 22 "schwimmend", d.h. frei beweglich geführt ist. Der Trennkolben 22 teilt innerhalb des Speicherzylinders 20 einen über die hydraulische Verbindung 4 mit dem Federbein 2 verbundenen Hydraulik-Speicherraum 24 von einer mit einem kompressiblen Medium, insbesondere mit Gas, gefüllten Federkammer 26 ab.

Der lastabhängige hydraulische Druck $p_h$ innerhalb des Zylinderraums 14 des Federbeins 2 wirkt über die hydraulische Verbindung 4 auch in dem Speicherraum 24 des Kolbenspeichers 6. Durch eine entsprechende Verschiebung des Trennkolbens 22 und eine Komprimierung des kompressiblen Mediums in der Federkammer 26 stellt sich dort ein pneumatischer Druck $p_p$ ein. Somit wird der Trennkolben 22 auf seiner dem Speicherraum 24 zugekehrten Seite mit dem hydraulischen Druck $p_h$ beaufschlagt, wodurch aufgrund der Beziehung $F = p \cdot A$ eine "hydraulische Kraft" $F_h$ erzeugt wird, die die Tendenz hat, den Trennkolben 22 in Richtung der Federkammer 26 zu verschieben. Dem wirkt allerdings eine "pneumatische Kraft" $F_p$ entgegen, die durch Beaufschlagung der gegenüberliegenden Druckfläche des Trennkolbens 22 mit dem pneumatischen Druck $p_p$ entsteht.

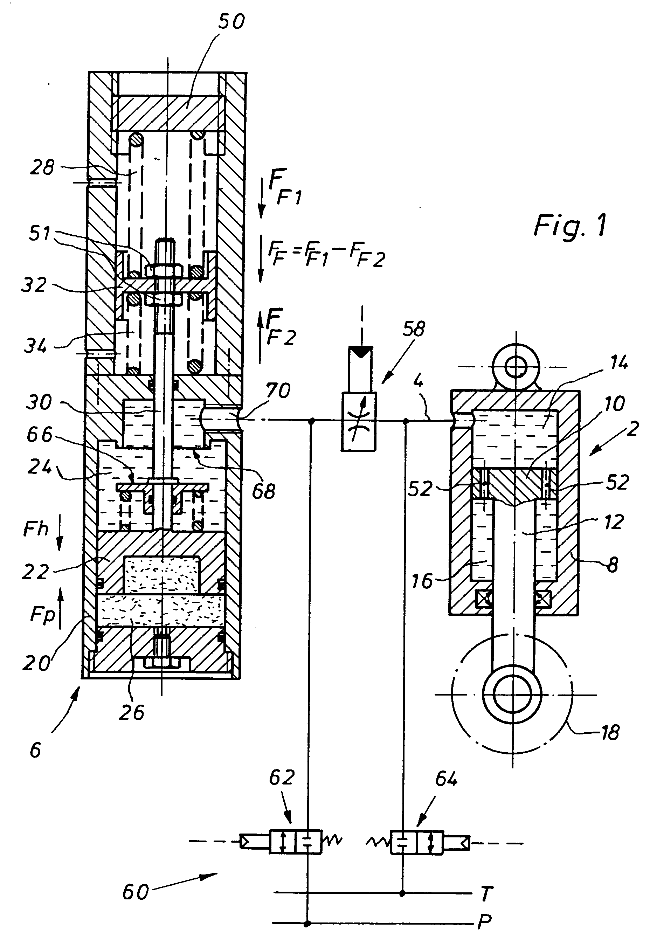

Hierbei ist nun vorgesehen, daß der Trennkolben 22 - zusätzlich zu den hydraulischen und pneumatischen Drücken $p_h$, $p_p$ und den daraus resultierenden Kräften $F_h$ und $F_p$ - mit einer Zusatz-Federkraft $F_F$ beaufschlagt ist. Hierfür gibt es nun mehrere Möglichkeiten, die im folgenden anhand der einzelnen Zeichnungsfiguren beispielhaft erläutert werden sollen. Der Trennkolben 22 könnte zunächst - in Abweichung von Fig. 1 - nur mit einer in Richtung der Federkammer 26 wirkenden Zusatz-Federkraft $F_F$ bzw. $F_{F1}$ beaufschlagt werden, die von einem mechanischen Federelement 28 erzeugt wird, welches hier als Schraubendruckfeder ausgebildet ist. Hierdurch wird erfindungsgemäß erreicht, daß die Zusatz-Federkraft $F_F$ ($F_{F1}$) - aufgrund der Federkennlinie des Federelementes 28 - bei einer geringen Last des Federbeins 2, wenn nämlich aufgrund der entsprechend geringen hydraulischen und pneumatischen Drücke $p_h$ und $p_p$ der Trennkolben 22 in einer in Richtung eines speicherraumseitigen Endanschlages verschobenen Stellung steht (kleines Volumen des Speicherraums 24 und größeres Volumen der Federkammer 26), größer ist als bei einer höheren Last, wenn nämlich aufgrund der höheren Drücke $p_h$ und $p_p$ der Trennkolben 22 mehr in Richtung der Federkammer 26 verschoben ist. Dabei gilt aber jeweils die Gleichung $F_p = F_h + F_F$.

Eine mögliche Alternative besteht darin, daß die Zusatz-Federkraft $F_F$ bzw. $F_{F2}$ den Trennkolben 22 nur in Richtung des Speicherraums 24 beaufschlagen kann. Bei dieser Ausführung wird dann eine zur obigen Wirkung "umgekehrte" Wirkung erreicht, d.h. die Zusatz-Federkraft $F_F$ bzw. $F_{F2}$ ist bei einer geringen Last des Federbeins 2 und dementsprechend geringen Drücken $p_h$, $p_p$ kleiner als bei einer höheren Last und entsprechend höheren Drücken $p_h$, $p_p$. Hierbei gilt die Gleichung $F_h = F_p + F_F$ bzw. $F_p = F_h - F_F$.

Bei der in Fig. 1 veranschaulichten Ausführungsform wird der Trennkolben 22 sowohl mit einer ersten Federkraft $F_{F1}$ (gleiche Richtung wie die hydraulische Kraft $F_h$) als auch mit einer entgegengesetzten zweiten Federkraft $F_{F2}$ (gleiche Richtung wie die pneumatische Kraft $F_p$) beaufschlagt, so daß sich die resultierende Zusatz-Federkraft $F_F$ aus der Differenz $F_F = F_{F1} - F_{F2}$ ergibt. Je nach Höhe der einzelnen Federkräfte $F_{F1}$ und $F_{F2}$ ergibt sich hieraus eine Beaufschlagung des Trennkolbens 22 in Richtung des Speicherraums 24 oder in Richtung der Federkammer 26, und zwar ist es erfindungsgemäß besonders vorteilhaft, wenn die Federkraft-Kennlinien derart abgestimmt sind, daß durch die resultierende ZusatzFederkraft $F_F$ bei hoher Last des Federbeins 2 der dieser Last an sich entsprechende pneumatische Druck $p_p$ reduziert wird (Kraft $F_{F2}$ überwiegt), während bei niedriger Last der dieser an sich

entsprechende Druck $p_p$ erhöht wird (Kraft $F_{F1}$ überwiegt). Die Wirkungsweise dieser Maßnahme wurde oben bereits eingehend erläutert, so daß an dieser Stelle auf die Beschreibungseinleitung verwiesen werden kann.

Wie sich nun ferner aus Fig. 1 ergibt, wird der Trennkolben 22 mittelbar über eine mit diesem verbundene Trennkolbenstange 30 beaufschlagt, wobei diese Trennkolbenstange 30 insbesondere durch den Speicherraum 24 hindurch abgedichtet aus dem Speicherzylinder 20 geführt ist. An ihrem freien Ende ist die Trennkolbenstange 30 mit einem Kraftübertragungselement 32 verbunden, welches einerseits von einem ersten Federelement 28 sowie andererseits in die entgegengesetzte Richtung von einem zweiten Federelement 34 beaufschlagt ist. Im dargestellten Beispiel sind beide Federelemente 28 und 34 als Schraubendruckfedern ausgebildet, sie können jedoch durchaus auch durch funktionell entsprechende Zugfedern ersetzt werden. Ferner sind auch Kombinationen von Druck- und Zugfedern möglich.

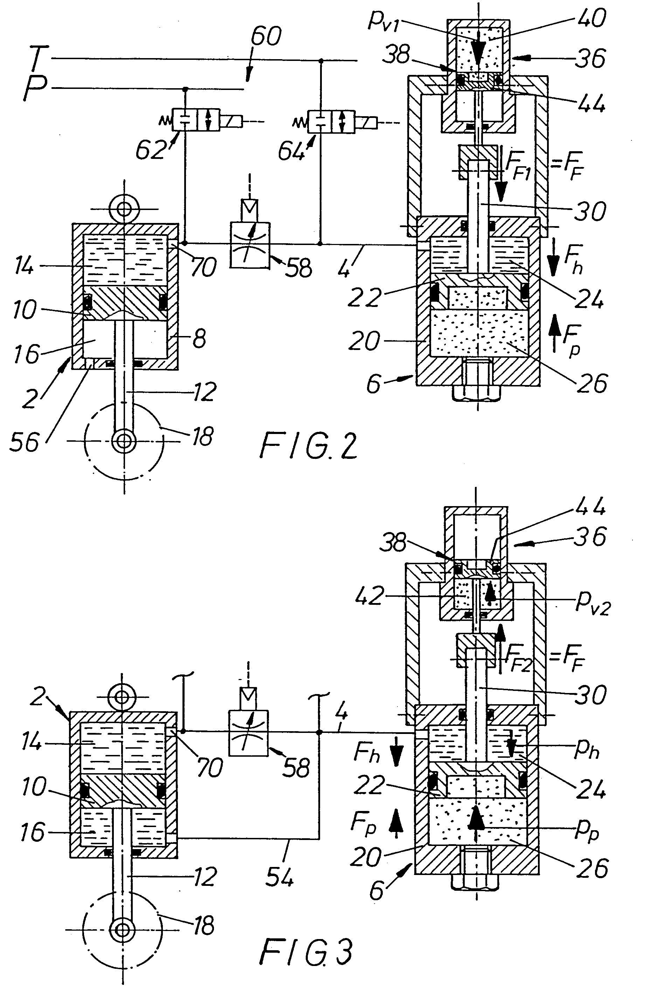

In den Fig. 2, 3 und 4 sind nun Ausführungen veranschaulicht, bei denen ein über die Trennkolbenstange 30 auf den Trennkolben 22 wirkendes Federelement 36 von einer Zylinderkolbeneinheit 38 gebildet ist. Diese Zylinderkolbeneinheit 38 besitzt mindestens einen Druckraum 40 bzw. 42, in dem ein elastischer Vorspanndruck $p_{v1}$ bzw. $p_{v2}$ herrscht, so daß durch Beaufschlagung eines Kolbens 44 die entsprechende Federkraft $F_F$ bzw. $F_{F1}$, $F_{F2}$ erzeugt wird.

Im Falle der Fig. 2 ist der Druckraum 40 auf der dem Trennkolben 22 abgekehrten Seite des Kolbens 44 angeordnet und mit dem Druck $p_{v1}$ beaufschlagt, so daß bei dieser Ausführung die Zusatz-Federkraft $F_F$ den Trennkolben 22 in Richtung der Federkammer 26 beaufschlagt und somit der ersten Federkraft $F_{F1}$ entspricht.

In der Ausführung nach Fig. 3 ist der Druckraum 42 auf der dem Trennkolben 22 zugekehrten Seite des Kolbens 44 angeordnet und mit dem Druck $p_{v2}$ beaufschlagt, so daß hier die Zusatz-Federkraft $F_F = F_{F2}$ den Trennkolben 22 in Richtung des Speicherraums 24 beaufschlagt.

Dabei ist in beiden Ausführungen gemäß Fig. 2 und 3 der jeweilige Druckraum 40, 42 unmittelbar mit einem kompressiblen Medium gefüllt, so daß die Druckräume 40, 42 jeweils pneumatische Federkammern bilden.

Die Ausführungen nach Fig. 2 und 3 können natürlich auch so miteinander kombiniert werden, daß eine der Fig. 1 funktionell entsprechende Ausführungsform entsteht, wobei die Zylinderkolbeneinheit 38 gleichzeitig beide Druckräume 40 und 42 aufweist; es gilt dann wieder: $F_F = F_{F1} - F_{F2}$.

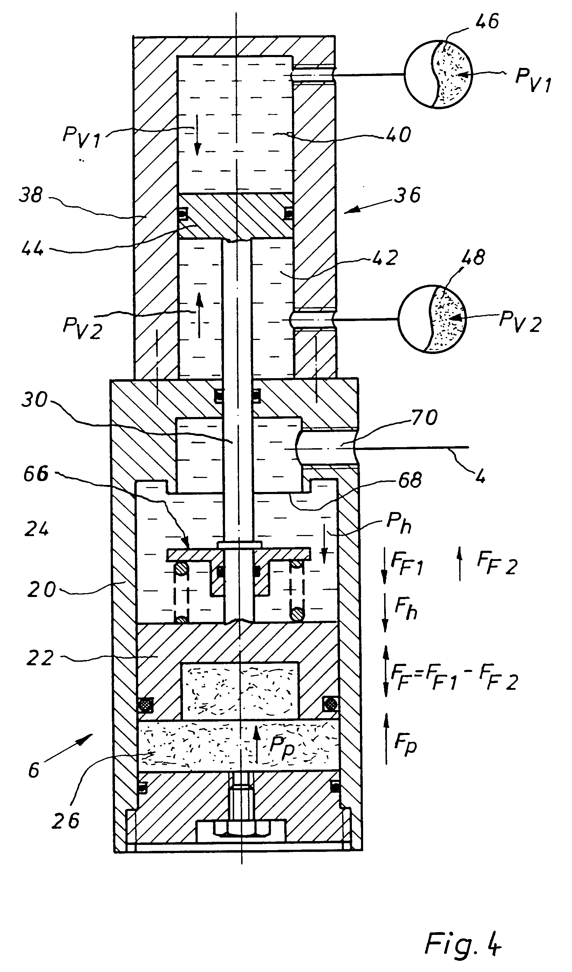

Diese Ausführung ist in Fig. 4 veranschaulicht, wobei hier allerdings die Druckräume 40 und 42 nicht selbst mit einem pneumatischen Medium gefüllt sind, sondern vielmehr mit einem hydraulischen Medium, wobei jeder Druckraum 40, 42 mit einem hydropneumatischen Speicher 46, 48 verbunden ist.

Erfindungsgemäß ist es besonders vorteilhaft, wenn die Höhe der jeweils wirksamen Zusatz-Federkraft $F_F$ ($F_{F1}$, $F_{F2}$) über Einstellmittel veränderbar ist. Dies kann beispielsweise bei der in Fig. 1 veranschaulichten, mechanischen Ausführung durch Veränderung der Vorspannung mindestens eines der Federelemente 28 und/oder 34 z.B. über mechanische Einstellelemente 50 und/oder 51 erreicht werden. Bei den Ausführungsformen der Fig. 2 bis 4 ist dann jeweils mindestens einer der elastischen Vorspanndrücke $p_{v1}$ und/oder $p_{v2}$ über geeignete Druck-Einstellmittel variabel. Es kann hierdurch vorteilhafterweise eine Einstellung der Kennlinie der jeweils wirksamen Zusatz-Federkraft $F_F$ vorgenommen werden, und zwar auf relativ einfache Weise und über einen sehr weiten Bereich (großes Kennlinienfeld).

Ferner ist es für bestimmte Anwendungsfälle besonders vorteilhaft, wenn die jeweils wirksame bzw. resultierende Zusatz-Federkraft $F_F$ bzw. $F_{F1}$ - $F_{F2}$ über den Weg des Trennkolbens 22 hinweg einen nicht-linearen, sondern progressiven oder degressiven oder s-förmigen Verlauf aufweist. Im Falle eines s-förmigen Verlaufs ist die Kennlinie entweder erst degressiv und dann progressiv oder aber erst progressiv und dann degressiv. Mit anderen Worten bedeutet dies, daß das insgesamt - gegebenenfalls durch "Zusammenschaltung" mehrerer Federelemente - wirksame Federelement eine sich über den Weg verändernde Federsteifigkeit c (Kraftänderung pro Wegeinheit) besitzt; es gilt die Beziehung

$$c = \frac{\Delta F}{\Delta s} .$$

Diese besonders vorteilhafte Maßnahme hat folgenden Hintergrund.

Die Eigenfrequenz f eines Federsystems ist wegen der Beziehung

$$f = \frac{1}{2\pi} \cdot \sqrt{\frac{c}{m}}$$

unter anderem abhängig von der Masse m. Somit würde sich in einem Fahrzeug bei einer Laständerung auch eine Verstimmung der Federung durch Änderung der Eigenfrequenz f ergeben. Erfindungsgemäß wird nun aber eine sich derart wegabhängig ändernde Federsteifigkeit c gewählt, daß - je nach Anwendungsfall - die Eigenfrequenz f zumindest annähernd konstant bleibt oder aber bewußt zur optimierenden Anpassung an die jeweilige Last verändert wird.

Im folgenden sollen einige Ausführungsvarianten des erfindungsgemäßen Federungssystems erläutert werden.

Bei den Ausführungsformen der Fig. 1 und 3 ist der Ringraum 16 des Federbeins 2 hydraulisch mit dem Zylinderraum 14 verbunden, so daß auch hier der hydraulische Druck $p_h$ herrscht. Daher ergibt sich eine zur Erzeugung der Tragkraft maßgebliche Druckfläche des Kolbens 10 aus der Differenz der beiden gegenüberliegenden Kolbenflächen; die wirksame Druckfläche entspricht somit dem Querschnitt der Kolbenstange 12. Im Falle der Fig. 1 ist für diese hydraulische Verbindung vorgesehen, daß der Kolben 10 Durchgangspassagen 52 aufweist, über die das Hydraulikmedium zwischen den Räumen 14 und 16 hin- und herströmen kann. Wie in Fig. 3 dargestellt ist, kann alternativ hierzu der Ringraum 16 auch über eine externe Verbindung 54 mit dem Zylinderraum 14 verbunden sein. Bei diesen Ausführungen erübrigt sich dann eigentlich auch eine Kolbendichtung für den Kolben 10.

In der Ausführungsform gemäß Fig. 2 ist demgegenüber der Ringraum 16 des Federbeins 2 über eine Lüftungsöffnung 56 des Zylinders 8 mit der Außenatmosphäre verbunden, so daß diese Kolbenseite praktisch drucklos ist (Atmosphärendruck). Durch diese Ausgestaltung ist zur Erzeugung der Tragkraft die gesamte, dem Zylinderraum 14 zugekehrte Fläche des Kolbens 10 maßgebend. Hierdurch kann das Federbein 2 auch für große Lasten sehr kompakt gehalten werden. Diese Ausführung eignet sich daher insbesondere für Lastkraftwagen.

Es ist weiterhin vorteilhaft, wenn die Hydraulikströmung zwischen dem Federbein 2 und dem Kolbenspeicher 6 insbesondere beim Ausfedern des Federbeins 2 gedämpft wird. Hierzu ist zweckmäßigerweise in der hydraulischen Verbindung 4 zwischen dem Federbein 2 und dem Kolbenspeicher 6 ein insbesondere lastabhängig steuer- bzw. regelbares Dämpfungsventil 58 angeordnet. Des weiteren könnte mit Vorteil in dieser hydraulischen Verbindung 4 auch ein - hier allerdings nicht dargestelltes - Absperrventil angeordnet sein, mit dem der Speicher 6 von dem Federbein 2 "abgekoppelt" werden könnte, wodurch eine Blockierung der Federungsbewegungen des Federbeins 2 erreicht werden kann.

Das Federbein 2 bzw. dessen Zylinderraum 14 ist zudem vorteilhafterweise mit einer hydraulischen Nivelliereinrichtung 60 verbunden, die in den dargestellten Beispielen aus zwei Schaltventilen 62, 64 besteht, die eingangsseitig mit einer Druckleitung P einerseits und einer Tankleitung T andererseits sowie ausgangsseitig mit dem Zylinderraum 14 verbunden sind, so daß letzterer wahlweise mit der Druckleitung P oder der Tankleitung T verbunden werden kann. Hierdurch kann durch Zuführen oder Entnehmen von Hydraulikmedium das Niveau des Federbeins 2 eingestellt werden. Diese Niveaueinstellung kann vorteilhafterweise auch automatisch bewirkt werden, und zwar durch geeignete Niveausensoren, die die jeweilige Hubstellung des Federbeins 2 - beispielsweise durch eine Distanzmessung zwischen Achse und Rahmen - erfassen.

Der Vollständigkeit halber ist noch zu erwähnen, daß der Kolbenspeicher 6 aufgrund der mit dem Trennkolben 22 verbundenen Trennkolbenstange 40 grundsätzlich als Druckwandler derart ausgebildet ist, daß der pneumatische Druck $p_p$ "normalerweise" stets geringer als der hydraulische Druck $p_h$ ist. Dieser Druckunterschied wird nun allerdings durch die erfindungsgemäße Beaufschlagung des Trennkolbens 22 mit der Zusatz-Federkraft $F_F$ jeweils beeinflußt. Dies kann - je nach Auslegung der Zusatz-Federkraft-Kennlinie - dazu führen, daß ab einem bestimmten Lastzustand der pneumatische Druck geringfügig größer als der hydraulische Druck wird. Allerdings kann dies durch geeignete Auslegung auch ohne weiteres vermieden werden.

Es soll nun noch eine vorteilhafte Weiterbildung des Kolbenspeichers 6 erläutert werden. Hierbei handelt es sich darum, daß der Trennkolben 22 auf der Seite des Speicherraumes 24 ein Verschlußelement 66 aufweist, welches in einer in Richtung eines speicherraumseitigen Endanschlages 68 verschobenen Absperrstellung des Trennkolbens 22 einen in den Speicherraum 24 mündenden Hydraulik-Anschluß 70 derart verschließt, daß ein von einem Restvolumen des Speicherraumes 24 gebildeter, abgeschlossener, vollständig mit dem Hydraulikmedium gefüllter Druckraum (in den Zeichnungsfiguren nicht bezeichnet) gebildet wird. Dabei ist das Verschlußelement 66 derart federelastisch ausgebildet bzw. derart federelastisch relativ zu dem Trennkolben 22 beweglich angeordnet, daß der Trennkolben 22 gegen eine Federkraft über die Absperrstellung hinaus in Richtung des Endanschlages 68 zumindest noch geringfügig beweglich ist. Diese Ausgestaltung hat den Zweck, in allen möglichen Betriebszuständen stets eine hermetische Abdichtung der Federkammer gegen ein Entweichen des kompressiblen Mediums zu gewährleisten. Zu derartigen Undichtigkeiten könnte es insbesondere dann kommen, wenn der Speicherraum im wesentlichen drucklos ist und der Trennkolben hierdurch aufgrund des pneumatischen Druckes in der Federkammer an dem speicherraumseitigen Endanschlag zur Anlage kommt (Ausfederungsendlage). Dies ist z.B. der Fall, wenn bei der Herstellung des Kolbenspeichers mit noch nicht unter hydraulischem Druck stehendem Speicherraum die Federkammer schon mit einem bestimmten pneumatischen Vorspanndruck gefüllt wird.

Ferner tritt dieser kritische Zustand auf, wenn das Federbein 2 ganz entlastet wird. In allen diesen Fällen ist dann der pneumatische Druck sehr viel größer als der Druck innerhalb des Speicherraums, weshalb das kompressible Medium über die Trennkolbendichtung und den Speicherraum entweichen könnte. Durch das vorzugsweise vorhandene Verschlußelement 66 stützt sich nun der Trennkolben 22 in der Absperrstellung, d.h. bereits vor Erreichen des mechanischen, speicherraumseitigen Endanschlages 68, auf dem in dem gebildeten Druckraum eingeschlossenen, hydraulischen Medium (Hydraulikpolster) ab, so daß sich aufgrund der in dieser Stellung noch möglichen Axialbewegung des Trennkolbens 22 durch dessen Beaufschlagung mit dem pneumatischen Druck stets automatisch auch ein entsprechender Gegendruck auf der Seite des Speicher- bzw. Druckraums einstellt. Dieser Gegendruck paßt sich zudem auch vorteilhafterweise automatisch an, wenn sich der pneumatische Druck beispielsweise temperaturbedingt ändern sollte. Auf diese Weise wird die Trennkolbendichtung stets von beiden Seiten her mit aneinander angepaßten Drücken beaufschlagt, so daß sie praktisch nie nur gegen den vollen pneumatischen Druck abzudichten braucht. Nähere konstruktive Einzelheiten bezüglich des Verschlußelementes 66 sind in der Veröffentlichung DE-U-90 12 936 enthalten, worauf an dieser Stelle in vollem Umfang Bezug genommen wird.

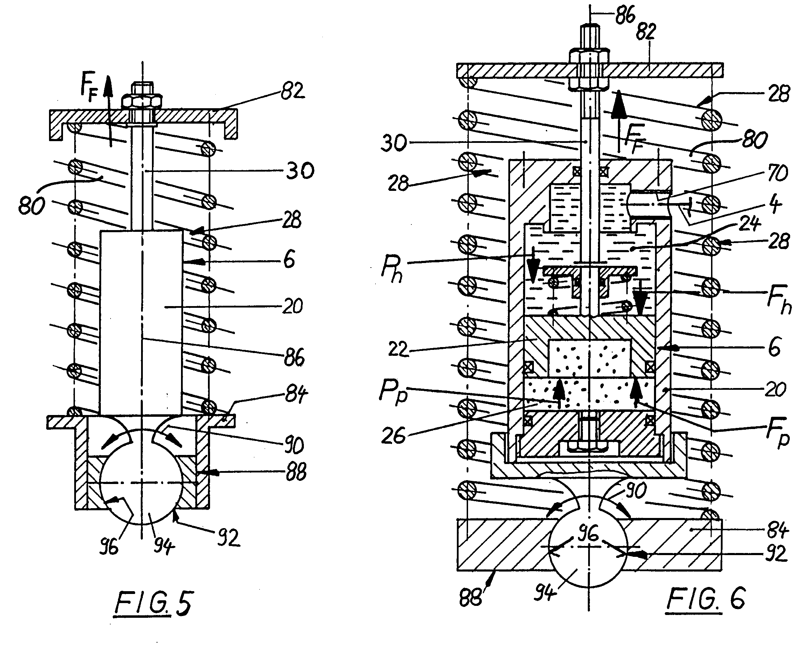

Anhand der Fig. 5 und 6 soll nun noch eine weitere, besonders vorteilhafte Weiterbildung der Erfindung erläutert werden, und zwar betrifft diese Weiterbildung diejenigen Ausführungsformen, bei denen der Trennkolben 22 über die Trennkolbenstange 30 von mindestens einem mechanischen Federelement 28 beaufschlagt wird.

Bei Kolbenspeichern in hydropneumatischen Federungssystemen ist es von wesentlicher Bedeutung für eine optimale Federungsfunktion, daß sich der Trennkolben sehr leichtgängig auch schon durch geringe Druckänderungen bewegt. Um dies zu erreichen, d.h. um stets eine optimal leichtgängige Funktion zu gewährleisten, ist nun erfindungsgemäß das Federelement 28 zumindest einendig über ein derart schwenkbeweglich mit dem Speicherzylinder 20 bzw. mit der Trennkolbenstange 30 verbundenes Widerlagerelement abgestützt, daß bei einem Versatz zwischen den Wirkachsen des Federelementes und des Speicherzylinders durch eine Relativ-Verschwenkung zwischen dem Widerlagerelement und dem Zylinder bzw. der Kolbenstange ein selbsttätiger Angleich der Wirkachsen erfolgt.

Hierbei beruht diese erfindungsgemäße Maßnahme auf der Erkenntnis, daß bei Federn, vor allem bei mechanischen Schraubenfedern, herstellungs- und/oder typbedingt oft die Wirkachse (Kraftrichtungsachse) von der Wirkachse (Bewegungsachse) des Kolbenspeichers insbesondere durch Unparallelität abweicht. Dies liegt beispielsweise daran, daß sich eine Schraubendruckfeder beim Zusammendrücken üblicherweise aus ihrer eigentlichen Wirkachse "ausbeult", woraus eine veränderte Kraftrichtung resultiert. Die Feder könnte dadurch die Kolbenstange nachteiligerweise nicht nur in deren axialer Richtung beaufschlagen, sondern es würde auch eine Querkraftkomponente entstehen, die die Kolbenstange gegebenenfalls derart stark verkanten könnte, daß eine Kolbenbewegung durch erhöhte Reibung mehr oder weniger stark beeinträchtigt, in schlimmen Fällen sogar ganz ausgeschlossen wäre.

Hier schafft nun die vorliegende Erfindung mit konstruktiv sehr einfachen Mitteln wirksame Abhilfe, denn jede von der Feder erzeugte Querkraft bewirkt erfindungsgemäß eine entsprechende, selbsttätige Relativ-Verschwenkung des jeweiligen Widerlagerelementes, bis die Wirkachse des Kolbenspeichers mit der Wirkachse der Feder zusammenfällt. Die Kolbenstange wird dann vorteilhafterweise nur noch mit einer genau axial gerichteten Kraft beaufschlagt, so daß verkantungsbedingte Reibungen bzw. Verklemmungen ausgeschlossen sind.

Wie sich nun im einzelnen aus Fig. 5 und 6 ergibt, stützt sich das Federelement 28 einendig am Speicherzylinder 20 und anderendig am freien Ende der Trennkolbenstange 30 ab. Das Federelement 28 ist in den dargestellten Ausführungsbeispielen als aus Federdraht gewickelte Schraubenfeder (Druck- oder Zugfeder) 80 ausgebildet. Diese Feder 80 umschließt den Speicherzylinder 20 und die Trennkolbenstange 30 im wesentlichen koaxial und ist unter Vorspannung zwischen einem am freien Ende der Trennkolbenstange 30 befestigten, vorzugsweise tellerförmigen, ersten Widerlagerelement 82 und einem im Bereich des axial gegenüberliegenden, geschlossenen Endes des Speicherzylinders 20 vorgesehenen, zweiten Widerlagerelement 84 angeordnet.

Im "Normalfall" sollten die Wirkachsen des Federelementes 28 (Federkraftachse) und des Kolbenspeichers 6 (Bewegungsachse des Trennkolbens 22 und der Trennkolbenstange 30) - wie dargestellt - zusammenfallen, weshalb in den Figuren 5 und 6 nur eine gemeinsame Wirkachse 86 eingezeichnet ist. In der Praxis treten hier aber oftmals Abweichungen zwischen den beiden Wirkachsen auf.

Daher ist nun in den bevorzugten Ausführungsformen der Erfindung vorgesehen, daß die Feder 80 zylinderseitig mittelbar an dem Speicherzylinder 20 angreift, wozu das zweite Widerlagerelement 84 - vorzugsweise als Teil einer Zylinderhalterung 88 - mit dem Speicherzylinder 20 erfindungsgemäß derart schwenkbeweglich verbunden ist, daß bei Abweichungen zwischen der Zylinder-Wirkachse und derjenigen des Federelementes 28 eine selbsttätige Relativ-Verschwenkung (vgl. den Doppelpfeil 90) erfolgt, bis beide Wirkachsen 86 aufeinanderfallen oder wenigstens parallel zueinander ausgerichtet sind.

Die erfindungsgemäße Relativverschwenkung erfolgt bei Wirkachsen-Versatz somit vorzugsweise zwischen dem Speicherzylinder 20 und dem zweiten Widerlagerelement 84 für die Feder 80, so daß hier eine Anpassung der Wirkachsen über eine Änderung der Neigung (Winkel zur Zylinder-Wirkachse) einer von dem Widerlagerelement 84 definierten Abstützebene der Feder 80 erfolgt.

Alternativ oder zusätzlich kann vorgesehen sein, das kolbenstangenseitige Widerlagerelement 82 in analoger Weise schwenkbeweglich mit der Trennkolbenstange 30 zu verbinden. In den dargestellten Beispielen ist hier allerdings eine praktisch starre, d.h. unverschwenkbare Verbindung vorgesehen.

Wie in beiden Figuren 5 und 6 veranschaulicht ist, ist der Speicherzylinder 20 vorzugsweise über ein Kugelgelenk 92 mit der Zylinderhalterung 88 bzw. dem zweiten Widerlagerelement 84 verbunden. Hierbei ist zweckmäßigerweise der Speicherzylinder 20 mit einem Kugelkopf 94 verbunden, und die Zylinderhalterung 88 besitzt eine Kugelaufnahme (Kugelpfanne) 96.

Die Maßnahme des "selbsttätigen Wirkachsen-Angleichs" zwischen einem Zylinder und einer Feder ist übrigens nicht nur für Kolbenspeicher anwendbar, sondern mit Vorteil auch für andere Zylinderkolbeneinheiten, bei denen eine mechanische Feder zwischen einem Zylinder und einer Kolbenstange angreift; dies ist z. B. bei sogenannten "Federbeinen" (Stoßdämpfern) der Fall.

Zur Erzeugung der Zusatz-Federkraft können auch beliebige andere geeignete Federelemente verwendet werden, und es können auch Kombinationen unterschiedlicher Federelemente vorgesehen sein.

**Patentansprüche**

1. Hydropneumatisches Federungssystem insbesondere für Kraftfahrzeuge, mit mindestens einem hydraulischen Federbein (2), welches bei seinen Federungsbewegungen über ein Hydraulikmedium gegen mindestens einen hydropneumatischen Kolbenspeicher (6) wirkt, der einen einen Hydraulik-Speicherraum (24) von einer ein kompressibles Medium, insbesondere ein Gas, enthaltenden Federkammer (26) trennenden Trennkolben (22) aufweist, wobei auf den Trennkolben (22) einerseits vom Speicherraum (24) her ein hydraulischer Druck ($p_h$) und andererseits von der Federkammer (26) her ein pneumatischer Druck ($p_p$) wirken, und wobei zusätzlich zu den aus dem hydraulischen Druck ($p_h$) und dem pneumatischen Druck ($p_p$) durch Beaufschlagung des Trennkolbens (22) resultierenden Kräften ($F_h$, $F_p$) auf den Trennkolben (22) des Kolbenspeichers (6) mindestens eine ZusatzFederkraft ($F_F$; $F_{F1}$; $F_{F2}$) wirkt,
**dadurch gekennzeichnet,** daß der Trennkolben (22) des Kolbenspeichers (6) mit einer nach außen geführten Trennkolbenstange (30) verbunden ist, wobei die Zusatz-Federkraft ($F_F$; $F_{F1}$; $F_{F2}$) durch mindestens ein außerhalb des Kolbenspeichers (6) angeordnetes und als Druck- oder Zugfeder über die Trennkolbenstange (30) auf den Trennkolben (22) wirkendes Federelement (28;34;36) erzeugt wird.

2. Federungssystem nach Anspruch 1,
**dadurch gekennzeichnet,** daß die Zusatz-Federkraft ($F_F$; $F_{F1}$) den Trennkolben (22) in Richtung der aus dem hydraulischen Druck resultierenden hydraulischen Kraft ($F_h$) beaufschlagt, und zwar insbesondere derart, daß die Zusatz-Federkraft bei einem geringen hydraulischen Druck ($p_h$) größer ist als bei einem höheren hydraulischen Druck ($p_h$).

3. Federungssystem nach Anspruch 1 oder 2,
**dadurch gekennzeichnet,** daß die Zusatz-Federkraft ($F_F$; $F_{F2}$) den Trennkolben (22) in Richtung der aus dem pneumatischen Druck resultierenden pneumatischen Kraft ($F_p$) beaufschlagt, und zwar insbesondere derart, daß die Zusatz-Federkraft bei einem geringen hydraulischen Druck ($p_h$) kleiner ist als bei einem höheren hydraulischen Druck ($p_h$).

4. Federungssystem nach einem der Ansprüche 1 bis 3,
**dadurch gekennzeichnet,** daß der Trennkolben (22) einerseits in Richtung der hydraulischen Kraft ($F_h$) mit einer ersten Zusatz-Federkraft ($F_{F1}$) und andererseits in Richtung der pneumatischen Kraft ($F_p$) mit einer zweiten Zusatz-Federkraft ($F_{F2}$) beaufschlagt ist, wobei sich eine resultierende Zusatz-Federkraft ($F_F$) aus diesen beiden gegensinnigen Federkräften insbesondere derart ergibt, daß durch die resultierende Zusatz-Federkraft ($F_F$) bei hohem hydraulischen Druck ($P_h$) der sich aus diesem an sich ergebende pneumatische Druck ($p_p$) reduziert und bei niedrigem hydraulischen Druck ($P_h$) der sich aus diesem an sich ergebende pneumatische Druck ($p_p$) erhöht werden.

5. Federungssystem nach einem der Ansprüche 1 bis 4,
**dadurch gekennzeichnet,** daß das die Zusatz-Federkraft ($F_F$) erzeugende Federelement durch mindestens ein mechanisches Federelelement (28) gebildet ist.

6. Federungssystem nach einem der Ansprüche 1 bis 4,
**dadurch gekennzeichnet,** daß das auf die Trennkolbenstange (30) wirkende Federelement (36) von einer Zylinderkolbeneinheit (38) gebildet ist, die mindestens einen Druckraum (40, 42) besitzt, in dem ein einen Kolben (44) beaufschlagender elastischer Vorspanndruck ($p_{v1}$, $p_{v2}$) herrscht.

7. Federungssystem nach Anspruch 6,
**dadurch gekennzeichnet,** daß der/jeder Druckraum (40, 42) der Zylinderkolbeneinheit (38) mit einem unter dem elastischen Vorspanndruck ($p_{v1}$, $p_{v2}$) stehenden, kompressiblen Medium, insbesondere einem Gas, gefüllt ist.

8. Federungssystem nach Anspruch 6,
**dadurch gekennzeichnet,** daß der/jeder Druckraum (40, 42) der Zylinderkolbeneinheit (38) mit Hydraulikmedium gefüllt sowie hydraulisch mit einem hydropneumatischen, den Vorspanndruck ($p_{v1}$, $p_{v2}$) erzeugendenr Speicher (46, 48) verbunden ist.

9. Federungssystem nach einem der Ansprüche 1 bis 8,
dadurch gekennzeichnet, daß die Höhe der jeweils wirksamen Zusatz-Federkraft ($F_F$; $F_{F1}$; $F_{F2}$) über Einstellmittel veränderbar ist.

10. Federungssystem nach einem der Ansprüche 1 bis 9,
dadurch gekennzeichnet, daß die jeweils wirksame bzw. resultierende Zusatz-Federkraft ($F_F$; $F_{F1}$; $F_{F2}$) über den Weg des Trennkolbens (22) hinweg einen nicht-linearen, sondern progressiven oder degressiven oder S-förmigen Verlauf aufweist.

11. Federungssystem nach einem der Ansprüche 1 bis 10,
dadurch gekennzeichnet, daß das Federbein (2) einen hydraulisch mit dem Kolbenspeicher (6) verbundenen Zylinderraum (14) sowie einen von diesem über einen Kolben (10) abgeteilten, eine Kolbenstange (12) umschließenden Ringraum (16) aufweist, wobei der Ringraum (16) entweder hydraulisch mit dem Zylinderraum (14) oder über eine Lüftungsöffnung (56) mit der Atmosphäre verbunden ist.

12. Federungssystem nach einem der Ansprüche 1 bis 11,
dadurch gekennzeichnet, daß in einer hydraulischen Verbindung (4) zwischen dem Federbein (2) und dem Kolbenspeicher (6) ein insbesondere lastabhängig einstellbares Dämpfungsventil (58) angeordnet ist.

13. Federungssystem nach einem der Ansprüche 1 bis 12,
dadurch gekennzeichnet, daß das Federbein (2) über eine Nivelliereinrichtung (60) wahlweise mit einer hydraulischen Druckleitung (P) oder einer Tank-RücklaufLeitung (T) verbindbar ist.

14. Federungssystem nach einem der Ansprüche 1 bis 13,
dadurch gekennzeichnet, daß der Trennkolben (22) auf der Seite des Speicherraumes (24) ein Verschlußelement (66) aufweist, welches in einer in Richtung eines speicherraumseitigen Endanschlages (68) verschobenen Absperrstellung des Trennkolbens (22) einen in den Speicherraum (24) mündenden Hydraulik-Anschluß (70) derart verschließt, daß ein ein Restvolumen des Speicherraumes (24) aufweisender, abgeschlossener, vollständig mit dem hydraulischen Medium gefüllter Druckraum gebildet ist, wobei das Verschlußelement (66) derart federelastisch ausgebildet ist, daß der Trennkolben (22) gegen eine Federkraft über die Absperrstellung hinaus in Richtung des Endanschlages (68) beweglich ist.

15. Federungssystem insbesondere nach einem der Ansprüche 1 bis 14,
dadurch gekennzeichnet, daß das über die Trennkolbenstange (30) auf den innerhalb eines Speicherzylinders (20) angeordneten Trennkolben (22) wirkende Federelement (28) zumindest einendig über ein derart schwenkbeweglich mit dem Speicherzylinder (20) bzw. mit der Trennkolbenstange (30) verbundenes Widerlagerelement (84) abgestützt ist, daß bei einem Versatz zwischen den Wirkachsen (86) des Federelementes (28) und des Speicherzylinders (20) durch eine Relativ-Verschwenkung zwischen dem Widerlagerelement (84) einerseits und dem Speicherzylinder (20) bzw. der Trennkolbenstange (30) andererseits ein selbsttätiger Angleich der Wirkachsen (86) erfolgt.

16. Federungssystem nach Anspruch 15,
dadurch gekennzeichnet, daß das schwenkbewegliche Widerlagerelement (84) mit dem Speicherzylinder (20) insbesondere über ein Kugelgelenk (92) verbunden ist.

17. Federungssystem nach Anspruch 15 oder 16,
dadurch gekennzeichnet, daß das Federelement (28) kolbenstangenseitig an einem im wesentlichen starr mit der Trennkolbenstange (30) verbundenen Widerlagerelement (82) angreift.

18. Federungssystem nach einem der Ansprüche 15 bis 17,
dadurch gekennzeichnet, daß das Federelement (28) als eine den Speicherzylinder (20) und die Trennkolbenstange (30) im wesentlichen koaxial umschließende Schraubenfeder, inbesondere Schraubendruckfeder, ausgebildet ist.

**Claims**

1. Hydropneumatic spring system, in particular for motor vehicles, having at least one hydraulic strut (2) which, during its spring movements, acts via a hydraulic medium against at least one hydropneumatic piston-type accumulator (6) which has a separating piston (22) separating a hydraulic accumulator space (24) from a spring chamber (26) containing a compressible medium, in particular a gas, a hydraulic pressure ($p_h$) acting on the separating piston (22) from the accumulator space (24) on the one hand and a pneumatic pressure ($p_p$) acting on the separating piston (22) from the spring chamber (26) on the other hand, and, in addition to the forces ($F_h$, $F_p$) resulting from the hydraulic pressure ($p_h$) and the pneumatic pressure ($p_p$) through charging of the separating piston (22), at least one additional spring force ($F_F$; $F_{F1}$; $F_{F2}$) acting on the separating piston (22) of the piston-type accumulator (6), characterised in that the separating piston (22) of the piston-type accumulator (6) is connected to a separating-piston rod (30) which is led to the outside, the additional spring force ($F_F$; $F_{F1}$; $F_{F2}$) being produced by at least one spring element (28;34;36) which is arranged outside the piston-type accumulator (6) and acts, as a compression or tension spring, on the separating piston (22) via the separating-piston rod (30).

2. Spring system according to Claim 1, characterised in that the additional spring force ($F_F$; $F_{F1}$) charges the separating piston (22) in the direction of the hydraulic force ($F_h$) resulting from the hydraulic pressure, in particular in such a way that the additional spring force is greater at a low hydraulic pressure ($p_h$) than at a higher hydraulic pressure ($p_h$).

3. Spring system according to Claim 1 or 2, characterised in that the additional spring force ($F_F$; $F_{F2}$) charges the separating piston (22) in the direction of the pneumatic force ($F_p$) resulting from the pneumatic pressure, in particular in such a way that the additional spring force is smaller at a low hydraulic pressure ($p_h$) than at a higher hydraulic pressure ($p_h$).

4. Spring system according to one of Claims 1 to 3, characterised in that the separating piston (22) is charged in the direction of the hydraulic force ($F_h$) by a first additional spring force ($F_{F1}$) on the one hand and is charged in the direction of the pneumatic force ($F_p$) by a second additional spring force ($F_{F2}$) on the other hand, a resultant additional spring force ($F_F$) resulting from these two opposed spring forces in particular in such a way that, through the resultant additional spring force ($F_F$), at a high hydraulic pressure ($P_h$) the pneumatic pressure ($p_p$) resulting therefrom per se is reduced and at a low hydraulic pressure ($P_h$) the pneumatic pressure ($p_p$) resulting therefrom per se is increased.

5. Spring system according to one of Claims 1 to 4, characterised in that the spring element which produces the additional spring force ($F_F$) is formed by at least one mechanical spring element (28).

6. Spring system according to one of Claims 1 to 4, characterised in that the spring element (36) which acts on the separating-piston rod (30) is formed from a cylinder/piston unit (38) which possesses at least one pressure space (40, 42) in which there prevails an elastic prestressing pressure ($p_{v1}$, $p_{v2}$) which charges a piston (44).

7. Spring system according to Claim 6, characterised in that the/each pressure space (40, 42) of the cylinder/piston unit (38) is filled with a compressible medium, in particular a gas, which is under the elastic prestressing pressure ($p_{v1}$, $p_{v2}$).

8. Spring system according to Claim 6, characterised in that the/each pressure space (40, 42) of the cylinder/piston unit (38) is filled with hydraulic medium and is hydraulically connected to a hydropneumatic accumulator (46, 48) which produces the prestressing pressure ($p_{v1}$, $p_{v2}$).

9. Spring system according to one of Claims 1 to 8, characterised in that the size of the additional spring force ($F_F$; $F_{F1}$; $F_{F2}$) acting in each case can be varied via adjusting means.

10. Spring system according to one of Claims 1 to 9, characterised in that the additional spring force ($F_F$; $F_{F1}$; $F_{F2}$) acting or resulting in each case has a non-linear, but rather progressive or degressive or S-shaped course over the travel of the separating piston (22).

11. Spring system according to one of Claims 1 to 10, characterised in that the strut (2) has a cylinder space (14) which is hydraulically connected to the piston-type accumulator (6), and an annular space (16) which is partitioned off from the cylinder space via a piston (10) and encloses a piston rod (12), the annular space (16) being connected either hydraulically to the cylinder space (14) or via a vent opening (56) to the atmosphere.

12. Spring system according to one of Claims 1 to 11, characterised in that a damping valve (58), in particular a damping valve which is adjustable in dependence on the load, is arranged in a hydraulic connection (4) between the strut (2) and the piston-type accumulator (6).

13. Spring system according to one of Claims 1 to 12, characterised in that the strut (2) can be selectively connected, via a levelling device (60), to a hydraulic pressure line (P) or a tank return line (T).

14. Spring system according to one of Claims 1 to 13, characterised in that the separating piston (22) has on the side of the accumulator space (24) a closing element (66) which, in a shutting-off position, displaced in the direction of a limit stop (68) on the accumulator-space side, of the separating piston (22), closes a hydraulic connection (70), which opens into the accumulator space (24), in such a way that a pressure space is formed which has a remaining volume of the accumulator space (24), is closed off and is completely filled with the hydraulic medium, the closing element (66) being designed to be of such resilience that the separating piston (22) is movable against a spring force in the direction of the limit stop (68) beyond the shutting-off position.

15. Spring system in particular according to one of Claims 1 to 14, characterised in that the spring element (28) which acts via the separating-piston rod (30) on the separating piston (22) arranged within an accumulator cylinder (20) is supported, at least at one end, via an abutment element (84) which is connected to the accumulator cylinder (20) or to the separating-piston rod (30) to have such pivotable mobility that, in the event of an offset between the effective axes (86) of the spring element (28) and of the accumulator cylinder (20), an automatic matching of the effective axes (86) takes place owing to a relative pivoting between the abutment element (84) on the one hand and the accumulator cylinder (20) or the separating-piston rod (30) on the other hand.

16. Spring system according to Claim 15, characterised in that the pivotably movable abutment element (84) is connected to the accumulator cylinder (20) in particular via a ball-and-socket joint (92).

17. Spring system according to Claim 15 or 16, characterised in that the spring element (28) engages, on the piston-rod side, on an abutment element (82) connected substantially rigidly to the separating-piston rod (30).

18. Spring system according to one of Claims 15 to 17, characterised in that the spring element (28) is designed as a helical spring, in particular a helical compression spring, which encloses the accumulator cylinder (20) and the separating-piston rod (30) substantially coaxially.

**Revendications**

1. Système de suspension hydropneumatique, en particulier pour véhicules à moteur, comprenant au moins une jambe de force à ressort hydraulique (2) qui agit lors de ses mouvements de suspension au moyen d'un agent hydraulique, à l'encontre d'au moins un accumulateur à piston hydropneumatique (6) qui présente un piston séparateur (22) qui sépare une chambre d'accumulation hydraulique (24) d'une chambre de ressort (26) contenant un agent compressible, en particulier un gaz, le piston séparateur (22) étant soumis d'une part à une pression hydraulique ($p_h$) provenant de la chambre d'accumulation (24), et d'autre part, à une pression pneumatique ($p_p$) provenant de la chambre de ressort (26), au moins une force élastique supplémentaire ($F_F$ ; $F_{F1}$; $F_{F2}$) agissant sur le piston séparateur (22) de l'accumulateur à piston (6), en plus des forces ($F_h$, $F_p$) résultant de la pression hydraulique ($p_h$) et de la pression pneumatique ($p_p$) qui chargent le piston séparateur (22), caractérisé en ce que le piston séparateur (22) de l'accumulateur à piston (6) est relié à une tige (30) de piston séparateur guidée vers l'extérieur, la force élastique supplémentaire ($F_F$; $F_{F1}$; $F_{F2}$) étant engendrée par au moins un élément de ressort (28 ; 34 ; 36) disposé à l'extérieur de l'accumulateur à piston (6), et agissant sur le piston séparateur (22) au moyen de la tige (30) en tant que ressort de pression ou de traction.

2. Système de suspension selon la revendication 1, caractérisé en ce que la force élastique supplémentaire ($F_F$, $F_{F1}$) agit sur le piston séparateur (22) dans la direction de la force hydraulique ($F_h$) résultant de la pression hydraulique, en particulier de manière à ce que la force élastique supplémentaire soit plus importante pour une faible pression hydraulique ($p_h$) que pour une pression hydraulique ($p_h$) plus élevée.

3. Système de suspension selon la revendication 1 ou 2, caractérisé en ce que la force élastique supplémentaire ($F_F$, $F_{F2}$) agit sur le piston séparateur (22) dans la direction de la force pneumatique ($F_p$) résultant de la pression pneumatique, en particulier de manière à ce que la force élastique supplémentaire soit plus faible pour une faible pression hydraulique ($p_h$) que pour une pression hydraulique ($p_h$) plus élevée.

4. Système de suspension selon l'une des revendications 1 à 3, caractérisé en ce que le piston séparateur (22) est chargé d'une part par une première force élastique supplémentaire ($F_{F1}$) dans la direction de la force hydraulique ($F_h$), et, d'autre part, par une deuxième force élastique supplémentaire ($F_{F2}$) dans la direction de la force pneumatique ($F_p$), une force élastique supplémentaire résultante ($F_F$) étant engendrée à partir de ces deux forces élastiques contraires, en particulier de manière à ce que, grâce à la force élastique supplémentaire résultante ($F_F$), pour une pression hydraulique élevée ($P_h$), la pression pneumatique ($p_p$) qui en résulte soit réduite, et que pour une faible pression hydraulique ($P_h$), la pression pneumatique ($p_p$) qui en résulte soit augmentée.

5. Système de suspension selon l'une des revendications 1 à 4, caractérisé en ce que l'élément de ressort qui engendre la force élastique supplémentaire ($F_F$) est constitué par au moins un élément de ressort mécanique (28).

6. Système de suspension selon l'une des revendications 1 à 4,
caractérisé en ce que l'élément de ressort (36) qui agit sur la tige (30) du piston séparateur est formé par une unité à cylindre et piston (38) qui présente au moins une chambre de pression (40, 42) dans laquelle règne une pression élastique de précharge ($p_{v1}$, $p_{v2}$) agissant sur un piston (44).

7. Système de suspension selon la revendication 6,
caractérisé en ce que la/chaque chambre de pression (40, 42) de l'unité à cylindre et piston (38) est remplie d'un agent compressible, en particulier un gaz, soumis à une pression élastique de précharge ($p_{v1}$, $p_{v2}$).

8. Système de suspension selon la revendication 6,
caractérisé en ce que la/chaque chambre de pression (40, 42) de l'unité à piston et cylindre (38) est remplie d'un agent hydraulique et reliée hydrauliquement à un accumulateur hydropneumatique (46, 48) qui engendre la pression de précharge ($p_{v1}$, $p_{v2}$).

9. Système de suspension selon l'une des revendications 1 à 8,
caractérisé en ce qu'on peut faire varier à l'aide de moyens de réglage, l'importance de la force élastique supplémentaire ($F_F$ ; $F_{F1}$ ; $F_{F2}$) effective.

10. Système de suspension selon l'une des revendications 1 à 9,
caractérisé en ce que la force élastique supplémentaire résultante ou effective ($F_F$ ; $F_{F1}$ ; $F_{F2}$) suit un trajet non linéaire,mais progressif ou dégressif ou en forme de S au-delà du trajet du piston séparateur (22).

11. Système de suspension selon l'une des revendications 1 à 10,
caractérisé en ce que la jambe de force à ressort (2) comporte une chambre de cylindre (14) reliée de manière hydraulique à l'accumulateur à piston (6), ainsi qu'une chambre annulaire (16) séparée de la chambre de cylindre par un piston (10) et entourant une tige de piston (12), la chambre annulaire (16) étant reliée soit hydrauliquement à la chambre de cylindre (14), soit à l'atmosphère par une ouverture d'aération (56).

12. Système de suspension selon l'une des revendications 1 à 11,
caractérisé en ce qu'une vanne d'amortissement (58), en particulier réglable en fonction de la charge, est disposée dans une liaison hydraulique (4) entre la jambe de force à ressort (2) et l'accumulateur à piston (6).

13. Système de suspension selon l'une des revendications 1 à 12,
caractérisé en ce que la jambe de force à ressort (2) peut être reliée sélectivement par un dispositif d'équilibrage (60) à une conduite de pression hydraulique (P) ou à une conduite (T) de retour au réservoir.

14. Système de suspension selon l'une des revendications 1 à 13,
caractérisé en ce que le piston séparateur (22) présente du côté de la chambre d'accumulation (24) un élément de fermeture (66) qui, lorsque le piston séparateur (22) est déplacé vers une position de fermeture dans la direction d'une butée terminale (68) située du côté de la chambre d'accumulation (24), ferme une liaison hydraulique (70) qui débouche dans la chambre d'accumulation (24), de manière à former une chambre de pression fermée dont le volume est le volume restant de la chambre d'accumulation (24), cette chambre de pression étant totalement remplie d'agent hydraulique, l'élément de fermeture (66) ayant une élasticité telle que le piston séparateur (22) soit mobile à l'encontre d'une force élastique au-delà de la position de fermeture dans la direction de la butée terminale (68).

15. Système de suspension, en particulier selon l'une des revendications 1 à 14,
caractérisé en ce que l'élement de ressort (28) agissant par la tige (30) du piston séparateur sur le piston séparateur (22) disposé à l'intérieur d'un cylindre accumulateur (20) est soutenu au moins à l'une de ses extrémités par un élément de butée (84) relié de manière pivotante au cylindre accumulateur (20) ou à la tige (30) du piston séparateur, de manière à ce que, lors d'un décalage entre les axes de travail (86) de l'élément élastique (28) et du cylindre accumulateur (20), suite à un pivotement relatif entre l'élément de butée (84) d'une part et le cylindre accumulateur (20) ou la tige (30) du piston séparateur d'autre part, il se produise un équilibrage automatique des axes de travail (86).

16. Système de suspension selon la revendication 15,
caractérisé en ce que l'élément de butée (84) pivotant est relié au cylindre accumulateur (20), en particulier au moyen d'une articulation sphérique (92).

17. Système de suspension selon la revendication 15 ou 16,
caractérisé en ce que l'élément de ressort (28) agit du côté de la tige de piston sur un élément de butée (82) relié de manière sensiblement rigide à la tige (30) du piston séparateur.

18. Système de suspension selon l'une des revendications 15 à 17,
caractérisé en ce que l'élément de ressort (28) a la forme d'un ressort hélicoïdal, en particulier d'un ressort hélicoïdal de pression, entourant de manière sensiblement coaxiale le cylindre accumulateur (20) et la tige (30) du piston séparateur.

$F_F = F_{F1} - F_{F2}$

Fig. 1

FIG.2

FIG.3

Fig. 4

FIG. 6

FIG. 5